# EUROPEAN PATENT SPECIFICATION

(11) **EP 2 433 917 B1**
(45) Date of publication and mention of the grant of the patent: **28.06.2017**
(21) Application number: 10180874.9
(22) Date of filing: 28.09.2010
(51) Int. Cl.: C04B 24/26, C04B 26/06, D06F 37/26

(54) **Component part of a household appliance, in particular of a washing group of a household appliance, made of polymeric concrete material**
Bestandteil eines Haushaltsgeräts, insbesondere eine aus polymerischem Betonmaterial hergestellte Waschgruppe eines Haushaltsgerätes
Pièce de composant d'un appareil domestique, en particulier d'un groupe de lavage d'appareil domestique, fabriqué à partir de matériau en béton polymérique

(43) Date of publication of application: 28.03.2012
(73) Proprietor: Electrolux Home Products Corporation N.V., 1130 Brussels (BE)
(72) Inventor: Sanita', Massimo, 33080 Porcia (PN) (IT); Bortolotti, Paolo, 33080 Porcia (PN) (IT); Badali, Marco, 33080 Porcia (PN) (IT)
(74) Representative: Electrolux Group Patents

(56) References cited:
- EP-A1- 1 780 326
- EP-A2- 0 417 460
- EP-A2- 1 469 117
- WO-A1-01/42552

## Description

The present invention relates to a component part of a household appliance, in particular of a washing group of a household appliance, made of polymeric concrete material; more specifically, the invention relates to the use of a polymeric concrete material for the manufacture of component parts of a household appliance, in particular (but not only) a component part of a washing group such as a tub of a washing machine or a dryer.

Many component parts of a household appliance, and in particular of the washing group of e.g. a washing machine, are commonly designed in order to balance production cost and performance.

Since such components are usually made of polymeric, additionally filled or reinforced material, the common approach in order to save costs calls for a reduction in the amount of polymeric material used.

The plastic material of the tub shell is usually chosen so as to provide mechanical and thermal resistance, and for such a purpose a polypropylene compound is normally appropriate. Polypropylene compounds can be filled with minerals or reinforced with glass fibres.

The relationship between stiffness and amount of filler/reinforcement is well known: stiffness generally increases with the filler/reinforcement content.

At the same way there is a relationship between strength and filler or reinforcement content: generally, filler content drops strength, while strength generally increases with the amount of reinforcement fibers.

The usual design approach, aiming to reduce costs by material weight reduction, can however bring to unsatisfactory results, insofar an excessive reduction of material would weaken the component structure, that would have lower stiffness and mechanical strength.

The problem is particularly important for components, such as washing machine tubs, that must have good mechanical characteristics of stiffness and resistance, as well as thermal resistance.

Moreover, in the case of a tub or other similar parts, a weight reduction affects also the dynamical behaviour. In fact, the washing group of a washing machine is a system all elements of which have to be properly designed so as to allow a proper dynamic control of the appliance.

The conventional approach to optimise the part shape by reducing the piece weight accordingly causes a disadvantage because it increases the difficulty to control the dynamic behaviour of the washing group. In extreme conditions the control software can not compensate completely the inertial effect across the cabinet structure resonances.

A simple remedy would consists in the addition of low cost counterweight masses to the washing group. The counterweight masses should have a cost lower than the plastic material removed; however, this solution can be difficult to implement, because of the little space available between the tub and the surrounding cabinet. Moreover, since an addition of material is however required (even if a low-cost material, such as concrete), the overall cost saving is eroded as well.

Another cost saving option would be, since the filler cost is usually lower that the basic resin cost, to increase the compound filler amount. However, also this solution would decrease the mechanical strength of the component part, even if the stiffness is increased, as mentioned above.

Moreover, even if high density compounds are known, known compounds are not suitable for direct use in a manufacturing process (such as injection moulding) of components, but requires further intermediate processing steps that would give the compounds the final properties needed for the component manufacturing process. Document EP-A2-0417460 discloses a component part of a washing group of a household appliance made of a polymeric concrete material. It is therefore an object of the present invention to provide a compound materials for manufacturing household appliance components parts, and a component part of a household appliance, in particular of a washing group of a household appliance, designed to eliminate the aforementioned drawbacks.

In particular, it is an object of the invention to provide a component part of a household appliance made of a polymeric concrete material that allows cost reduction with respect to known compound, while maintaining good mechanical and thermal resistance and good stiffness, as well as having well-defined inertia properties.

It is another object of the invention to provide a household appliance component part that allows a reduction in the number of components of the appliance (by means of, for example, counterweight integration, elimination of screws and other fastening members, etc.).

According to the present invention, there is provided a component part of a household appliance, in particular a component part of a washing group of a household appliance as claimed in the independent claims.

Preferred aspects and further features of the invention are claimed in the dependent claims.

The preset invention relates to a component part of a household appliance, in particular a component part of a washing group of a household appliance, preferably a washing tub, made of a polymeric concrete material comprising a polymeric binder system and an inorganic filler; the component part being characterized in that the amount of filler in the material is greater than 60% wt.; and the binder system is an interpenetrated polymeric network, comprising one or more chemically cross-linked first polymers embedded in one or more second polymers and/or elastomers that are not chemically cross-linked.

Preferably, the polymeric binder system is essentially made of polyolefin-base polymeric materials and comprises a chemically cross-linked fraction and a fraction that is not chemically cross-linked.
Preferably, the polymeric binder system comprises at least one polyolefin polymer or a mixture of polyolefin polymers, in particular at least one isotactic polypropylene.

Preferably, the interpenetrated binder network comprises chemical bounds between one or more polyolefins functionalized with active groups and one or more resins acting as coupling agents to promote chemical cross-linking of the polymeric binder system.
Preferably, the polyolefins are functionalized with maleic anhydride and/or acrylic acid.

Preferably, the interpenetrated binder network comprises grafted polypropylenes and/or grafted olefin rubbers.

Preferably, the functionalized polyolefins are selected in the group consisting of: grafted polypropylene, such as maleic anhydride functionalized polypropylene (PP-g-MA), acrylic acid grafted polypropylene (PP-g-AA); functionalized elastomers such as ethylene copolymer functionalized with maleic anhydride, such as EPM-g-MA or EP(D)M-g-MA.

Preferably, the resins acting as coupling agents are epoxy resins.

Preferably, the component part according to one of the foregoing claims, wherein the polymeric binder system comprises at least one polyolefin elastomer.

Preferably, the polyolefin elastomer is EPM rubber or EPDM rubber.

Preferably, the polyolefin elastomer has a concentration greater than 30% wt. with respect to the total polymeric binder system.
Preferably, the mineral filler is selected in the group consisting of: calcium carbonate CaCO3, barium sulphate BaSO4, titanium bioxide Ti02, iron oxides such as haematite (Fe203) and magnetite (FeO x Fe203), zirconium oxide (Zr02), iron waste powders, mixtures thereof.

Preferably, the mineral filler is calcium carbonate CaCO3.

Preferably, the dimensions of the filler particles are: d50% lower than 5 µm, preferably lower than 2 µm; d98% lower than 40 µm, preferably lower than 10 µm.

Preferably, the filler is a coated mineral filler, for example calcium carbonate coated by stearic acid and/or calcium stearate.

Preferably, the polymeric concrete material comprises one or more additives acting on the mineral filler as dispersion agents and/or anti-agglomeration agents.

Preferably, the additives are selected in the group consisting of: organo-titanates such as isopropyl trioleyl titanate, neoalkoxy phosphate titanate, di(dioctylpyrophosphate) ethylene titanate, isopropyl tristearyl titanate, organo-zirconates, mixture thereof.

Preferably, the polymeric concrete material has a density ranging from 1,50 to 2,20 g/cm3 and preferably from 1,8 to 2,0 g/cm3.

Preferably, the amount of filler in the material is greater than 80% wt.

The invention related also to a process for manufacturing household appliance component parts, preferably a washing tub, comprising the steps of: preparing a compound made of the polymeric concrete material and hence comprising the polymeric binder system and the inorganic filler; manufacturing the component part using the compound, for example by injection moulding.

Preferably, the compound is prepared by a mixing process of components and directly used in the manufacturing step after the mixing process, without being subjected to additional treatment steps.

Though particularly advantageous for use in a washing group of a washing machine, and specifically for realizing the tub thereof, the invention may be advantageously applied to other kinds of electric household appliance, for example other laundry machines, such as driers or a washer-driers, etc.

Household appliance component parts according to the invention have both sufficient mechanical strength, necessary to prevent failure due to applied loads, and sufficient stiffness to resist to structure deformation.

According to the invention, the household appliance component parts are made of a compound that is essentially a polymeric concrete material, comprising a polymeric binder system, i.e. a polymeric system of one or more polymers, and a high amount of inorganic mineral filler, greater than 60% wt. and preferably greater than 80% wt.

The binder system is an interpenetrated polymeric network comprising a chemically cross-linked fraction and a fraction that is not chemically cross-linked; more specifically, the polymeric network comprises one or more chemically cross-linked first polymers embedded in one or more second polymers and/or elastomers that are not chemically cross-linked.

Chemically cross-linked fraction indicates a fraction in which ionic and /or covalent links are present.

According to a preferred embodiment, the polymeric network is basically made of polyolefin base polymeric materials (i.e. polymer materials having a basic polypropylene structure, optionally modified and/or functionalized).

In particular, the interpenetrated binder network comprises chemical bounds between one or more polyolefins functionalized with active groups and one or more resins acting as coupling agents to promote chemical cross-linking of the polymeric binder system.

For example, as it is better described hereinbelow, the polyolefins are functionalized with maleic anhydride and/or acrylic acid; the interpenetrated binder network comprises grafted polypropylenes and/or grafted olefin rubbers; and the resins acting as coupling agents are epoxy resins.

The material according to the invention allows improved processability (reduction of viscosity) and achieves better mechanical properties (in particular, toughness).

Moreover, differently than known high density compounds (that cannot be generally used in a component manufacturing process, such as injection moulding, without being preliminary processed), the materials according to the present invention can be used directly in the manufacturing process of the components, without additional steps.

The main problem of high density compounds is the exceeding of the weight threshold value, i.e. the condition in which the volume fractions of mineral filler and polymer part (polymeric binder) equalize. If such a threshold is exceeded, then there is a worsening of processability and mechanical properties.

The threshold depends mainly on the density of the mineral filler, i.e. the greater is the mineral filler density with respect to the polymer part, the higher is the threshold; a high threshold clearly allows materials having high density to be obtained easily, without dramatic worsening of properties. In principle, the desired density for components in the household appliance field is the density of concrete.

It would be accordingly preferable to use mineral fillers having the highest density, for example barium sulphate BaSO4, titanium bioxide Ti02, iron oxides such as haematite (Fe203) and magnetite (FeO x Fe203), zirconium oxide (Zr02), iron waste powders, etc.

Calcium carbonate has instead a relatively low density (about 2,7 g/cm3), and problems arise if calcium carbonate is used for obtaining high density materials, that should have a density comparable to the density of concrete.

Nevertheless, the invention provides a material having high density, even using carbonates mineral fillers.

Also the dimension of the mineral filler particles has an effect on the compound properties.

Usually, the dimension is defined by an average value d50% (dimension of at least 50% of the particles) and by a maximum value d98% (dimension of 98% of the particles).

The dimension distribution of the mineral filler particles is a factor that affects homogeneity of the polymer binder dispersion; the particles tend to agglomerate with one another and hence affect negatively the compound properties.

Advantageously, the dimensions of the filler particles are:
- d50% lower than 5 µm, preferably lower than 2 µm;
- d98% lower than 40 µm, preferably lower than 10 µm.

The finer are the particles, the higher is the tendency to agglomerate.

In order to prevent agglomeration, it is also possible to use coated mineral fillers, for example stearic acid or calcium stearate on calcium carbonate.

For the same purpose, the compound may also contain specific additives acting on the mineral filler as dispersion agents and anti-agglomeration agents; such additives have essentially the function of achieving a better dispersion of the mineral filler particles, in particular via a reduction of conglomerates and an increase of particles wettability by the polymeric binder.

Suitable additives are, for example: organic-titanates such as isopropyl trioleyl titanate, neoalkoxy phosphate titanate, di(dioctylpyrophosphate) ethylene titanate, isopropyl tristearyl titanate, or organic-zirconates.

Moreover, the compound properties depend on the type of polymeric binder, that can be a polyolefin polymer or a mixture of polyolefin polymers. The binder is preferably a mixture of an isotactic polypropylene (homopolymer or block copolymer or random copolymer) having specific properties (fluidity ≤ 4 g/10') and a polyolefin elastomer, for example EPM rubber (ethylenepropylene monomer) or EPDM rubber (ethylene-propylene-diene monomer), having a concentration preferably greater than 30% wt. with respect to the total organic fraction.

Fluidity of the polymer affects mechanical properties, while the characteristics of the elastomer affect tenacity and impact properties.

According to a preferred embodiment of the present invention, a mechanically cohesive structure between the mineral filler and the polymeric network is realized by means of chemical reactions between polyolefins functionalized with active groups (for example, maleic anhydride, acrylic acid) and epoxy resins.

In particular, grafted polypropylene is used, such as maleic anhydride functionalized polypropylene (PP-g-MA), acrylic acid grafted polypropylene (PP-g-AA); and/or functionalized elastomers such as EPM-g-MA, EP(D)M-g-MA i.e. ethylene copolymer functionalized with maleic anhydride; an epoxy resin is used for making the chemical cross-linking.

The structure of the compound is an interpenetrated polymer network embedded in a polymer or mixture of polymers or elastomers that are not chemically cross-linked; the mineral filler is dispersed in this organic phase.

The process for manufacturing household appliance component parts according to the invention basically comprises a first step, in which the above-described compound is prepared, and a second step, in which the compound is used for manufacturing the household appliance component part, for example by injection moulding.

The compounds are prepared by a mixing process of components, using for example co-rotating twin screw extruders, counter-rotating twin screw extruders, single screw extruders or batch mixers such as Banbury-type mixers.

All the main components of the compound, that is mineral filler(s), organic binder(s) and additive(s), are added in the mixing step directly or by means of additive concentrates in a resin (masterbatch).

The material of the invention has a density greater then conventional compounds, and in particular a density ranging from 1,50 to 2,20 g/cm3 and preferably from 1,8 to 2,0 g/cm3.

To accomplish this target, the compound is filled with minerals (e.g. calcium carbonate, barium sulphate, hematite, iron, titanium dioxide, etc.) at a very high amount, over 80%wt of the final compound, achieving the wanted density value.

In Table 1 compound composition ranges according to preferred embodiments of the invention are disclosed.

In table 1, term "binder" indicates the polymeric binder system (that may include more than one polymer, as described above); term "additive(s)" indicates one or more additives to prevent filler agglomeration in the compound (e.g. organo-zirconate or organo-titanate); term "epoxy resin" indicates one or more resins acting as coupling agents to promote the chemically cross-linking of the polymeric binder system, in particular between grafted polypropylenes and/or grafted olefin rubbers.

**Table 1 - Compound**

| Component | % (pph of compound) |
|---|---|
| Binder | 40÷10 |
| Filler | 60÷90 |
| anti-agglomeration additive(s) | 0÷2 |
| Epoxy resin | 1÷10 |

Preferred binder options and compositions are shown in Table 2.

**Table 2 - Binder resin**

| Component | % (pph of resin) | Notes |
|---|---|---|
| Polypropylene | 10÷90 | homopolymer, block copolymer, random copolymer |
| Ethylene Propylene (EPM) rubber and/or Ethylene propylene diene monomer (EPDM) rubber | 10÷90 | propylene content: 20÷50% |
| Polypropylene grafted maleic anhydride and/or polypropylene grafted acrylic acid | 10÷90 | maleic anhydride content: 0÷1,6%; acrylic acid content: 0÷6% |
| Ethylene copolymer rubber grafted maleic anhydride | 10÷90 | maleic content: 0÷1,6% |

Clearly, further changes may be made to the as described herein without, however, departing from the scope of the present invention as defined by the enclosed Claims.

## Claims

1. A component part of a household appliance, in particular a component part of a washing group of a household appliance, made of a polymeric concrete material comprising a polymeric binder system and an inorganic filler; the component part being **characterized in that** the amount of filler in the material is greater than 60% wt. of the final compound; and the binder system is an interpenetrated polymeric network, comprising one or more chemically cross-linked first polymers embedded in one or more second polymers and/or elastomers that are not chemically cross-linked.

2. The component part according to claim 1, wherein the polymeric binder system is essentially made of polyolefin-base polymeric materials and comprises a chemically cross-linked fraction and a fraction that is not cross-linked.

3. The component part according to one of the foregoing claims, wherein the polymeric binder system comprises at least one polyolefin polymer or a mixture of polyolefin polymers, in particular at least one isotactic polypropylene.

4. The component part according to one of the foregoing claims, wherein the interpenetrated binder network comprises chemical bounds between one or more polyolefins functionalized with active groups and one or more resins acting as coupling agents to promote chemical cross-linking of the polymeric binder system.

5. The component part according to claim 4, wherein the polyolefins are functionalized with maleic anhydride and/or acrylic acid.

6. The component part according to claim 4 or 5, wherein the interpenetrated binder network comprises grafted polypropylenes and/or grafted olefin rubbers.

7. The component part according to one of claims 4 to 6, wherein the functionalized polyolefins are selected in the group consisting of: grafted polypropylene, such as maleic anhydride functionalized polypropylene (PP-g-MA), acrylic acid grafted polypropylene (PP-g-AA); functionalized elastomers such as ethylene copolymer functionalized with maleic anhydride, such as EPM-g-MA or EP(D)M-g-MA.

8. The component part according to one of claims 4 to 7, wherein the resins acting as coupling agents are epoxy resins.

9. The component part according to one of the foregoing claims, wherein the polymeric binder system comprises at least one polyolefin elastomer.

10. The component part according to claim 9, wherein the polyolefin elastomer is EPM rubber or EPDM rubber.

11. The component part according to claim 9 or 10, wherein the polyolefin elastomer has a concentration greater than 30% wt. of the final compound with respect to the total polymeric binder system.

12. The component part according to one of the foregoing claims, wherein the mineral filler is selected in the group consisting of: calcium carbonate CaCO3, barium sulphate BaSO4, titanium bioxide Ti02, iron oxides such as haematite (Fe203) and magnetite (FeO x Fe203), zirconium oxide (Zr02), iron waste powders, mixtures thereof.

13. The component part according to one of the foregoing claims, wherein the polymeric concrete material has a density ranging from 1,50 to 2,20 g/cm3 and preferably from 1,8 to 2,0 g/cm3.

14. The component part according to one of the foregoing claims, wherein the amount of filler in the material is greater than 80% wt· of the final compound.

## Patentansprüche

1. Bauteil eines Haushaltsgeräts, insbesondere Bauteil einer Waschgruppe eines Haushaltsgeräts, bestehend aus einem Polymerbetonmaterial, das ein polymeres Bindemittelsystem und einen anorganischen Füllstoff umfasst; wobei das Bauteil **dadurch gekennzeichnet ist, dass** die Menge an Füllstoff in dem Material größer als 60 Gew.-% der Endverbindung ist; und das Bindemittelsystem ein interpenetrierendes Polymernetzwerk ist, das ein oder mehrere chemisch vernetzte erste Polymere umfasst, die in einem oder mehreren zweiten Polymeren und/oder Elastomeren, die nicht chemisch vernetzt sind, eingebettet sind.

2. Bauteil gemäß Anspruch 1, wobei das polymere Bindemittelsystem im Wesentlichen aus Polymermaterialien auf Polyolefin-Basis besteht und eine chemisch vernetzte Fraktion und eine Fraktion, die nicht vernetzt ist, umfasst.

3. Bauteil gemäß einem der vorstehenden Ansprüche, wobei das polymere Bindemittelsystem wenigstens ein Polyolefin-Polymer oder ein Gemisch von Polyolefin-Polymeren, insbesondere wenigstens ein isotaktisches Polypropylen, umfasst.

4. Bauteil gemäß einem der vorstehenden Ansprüche, wobei das interpenetrierende Bindemittelnetzwerk chemische Bindungen zwischen einem oder mehreren Polyolefinen, die mit aktiven Gruppen funktionalisiert sind, und einem oder mehreren Harzen, die als Kopplungsmittel zum Fördern der chemischen Vernetzung des polymeren Bindemittelsystems wirken, umfasst.

5. Bauteil gemäß Anspruch 4, wobei die Polyolefine mit Maleinsäureanhydrid und/oder Acrylsäure funktionalisiert sind.

6. Bauteil gemäß Anspruch 4 oder 5, wobei das interpenetrierende Bindemittelnetzwerk gepfropfte Polypropylene und/oder gepfropfte Olefinkautschuke umfasst.

7. Bauteil gemäß einem der Ansprüche 4 bis 6, wobei die funktionalisierten Polyolefine ausgewählt sind aus der Gruppe bestehend aus: gepfropftem Polypropylen, wie z. B. Maleinsäureanhydrid-funktionalisiertem Polypropylen (PP-g-MA), Acrylsäure-gepfropftem Polypropylen (PP-g-AA); funktionalisierten Elastomeren, wie z. B. mit Maleinsäureanhydrid funktionalisiertem Ethylen-Copolymer, wie z. B. EPM-g-MA oder EP(D)M-g-MA.

8. Bauteil gemäß einem der Ansprüche 4 bis 7, wobei die Harze, die als Kopplungsmittel wirken, Epoxyharze sind.

9. Bauteil gemäß einem der vorstehenden Ansprüche, wobei das polymere Bindemittelsystem wenigstens ein Polyolefin-Elastomer umfasst.

10. Bauteil gemäß Anspruch 9, wobei das Polyolefin-Elastomer EPM-Kautschuk oder EPDM-Kautschuk ist.

11. Bauteil gemäß Anspruch 9 oder 10, wobei das Polyolefin-Elastomer eine Konzentration von höher als 30 Gew.-% der Endverbindung bezogen auf das gesamte polymere Bindemittelsystem aufweist.

12. Bauteil gemäß einem der vorstehenden Ansprüche, wobei der mineralische Füllstoff ausgewählt ist aus der Gruppe bestehend aus: Calciumcarbonat CaCO3, Bariumsulfat BaSO4, Titandioxid TiO2, Eisenoxiden, wie z. B. Hämatit (Fe2O3) und Magnetit (FeO x Fe2O3), Zirkonoxid (ZrO2), Eisenabfallpulver, Gemischen davon.

13. Bauteil gemäß einem der vorstehenden Ansprüche, wobei das Polymerbetonmaterial eine Dichte in dem Bereich von 1,50 bis 2,20 g/cm³, vorzugsweise von 1,8 bis 2,0 g/cm³, aufweist.

14. Bauteil gemäß einem der vorstehenden Ansprüche, wobei die Menge an Füllstoff in dem Material größer als 80 Gew.-% der Endverbindung ist.

## Revendications

1. Partie d'élément d'un appareil ménager, en particulier partie d'élément d'un groupe de lavage d'un appareil ménager, constituée d'un matériau en béton polymère comprenant un système liant polymère et une charge inorganique ; la partie d'élément étant **caractérisée en ce que** la quantité de charge dans le matériau est supérieure à 60 % en poids du composat final ; et **en ce que** le système liant est un réseau polymère interpénétré, comprenant un ou plusieurs premiers polymères chimiquement réticulés encastrés dans un ou plusieurs seconds polymères et/ou élastomères qui ne sont pas chimiquement réticulés.

2. Partie d'élément selon la revendication 1, dans laquelle le système liant polymère est essentiellement constitué de matériaux polymères à base de polyoléfines et comprend une fraction chimiquement réticulée et une fraction qui n'est pas réticulée.

3. Partie d'élément selon l'une des revendications précédentes, dans laquelle le système liant polymère comprend au mois un polymère polyoléfinique ou un mélange de polymères polyoléfiniques, en particulier au moins un polypropylène isotactique.

4. Partie d'élément selon l'une des revendications précédentes, dans laquelle le réseau liant interpénétré comprend des liaisons chimiques entre une ou plusieurs polyoléfines fonctionnalisées par des groupes actifs et une ou plusieurs résines servant d'agents de couplage pour favoriser la réticulation chimique du système liant polymère.

5. Partie d'élément selon la revendication 4, dans laquelle les polyoléfines sont fonctionnalisées par l'anhydride maléique et/ou l'acide acrylique.

6. Partie d'élément selon la revendication 4 ou 5, dans laquelle le réseau liant interpénétré comprend des polypropylènes greffés et/ou des caoutchoucs oléfiniques greffés.

7. Partie d'élément selon l'une des revendications 4 à 6, dans laquelle les polyoléfines fonctionnalisées sont choisies dans le groupe constitué par : du polypropylène greffé, tel que du polypropylène fonctionnalisé anhydride maléique (PP-g-MA), du polypropylène greffé acide acrylique (PP-g-AA) ; les élastomères fonctionnalisés tels qu'un copolymère d'éthylène fonctionnalisé par l'anhydride maléique, tel que l'EPM-g-MA ou l'EP(D)M-g-MA.

8. Partie d'élément selon l'une des revendications 4 à 7, dans laquelle les résines servant d'agents de couplage sont des résines époxydes.

9. Partie d'élément selon l'une des revendications précédentes, dans laquelle le système liant polymère comprend au moins un élastomère polyoléfinique.

10. Partie d'élément selon la revendication 9, dans laquelle l'élastomère polyoléfinique est du caoutchouc EPM ou du caoutchouc EPDM.

11. Partie d'élément selon la revendication 9 ou 10, dans laquelle l'élastomère polyoléfinique a une concentration supérieure à 30 % en poids du composat final par rapport au système liant polymère total.

12. Partie d'élément selon l'une des revendications précédentes, dans laquelle la charge minérale est choisie dans le groupe constitué par : le carbonate de calcium CaCO₃, le sulfate de baryum BaSO₄, le dioxyde de titane TiO₂, les oxydes de fer tels que l'hématite (Fe₂O₃) et la magnétite (FeO x Fe₂O₃), l'oxyde de zirconium (ZrO₂), les poudres de déchets de fer, les mélanges de ceux-ci.

13. Partie d'élément selon l'une des revendications précédentes, dans laquelle le matériau en béton polymère a une masse volumique allant de 1,50 à 2,20 g/cm³ et de préférence de 1,8 à 2,0 g/cm³.

14. Partie d'élément selon l'une des revendications précédentes, dans laquelle la quantité de charge dans le matériau est supérieure à 80 % en poids du composat final.
